# EUROPEAN PATENT APPLICATION

(11) **EP 4 385 682 A1**
(43) Date of publication of application: **19.06.2024**
(21) Application number: 22927459.2
(22) Date of filing: 22.11.2022
(51) Int. Cl.: B25J 15/04, B25J 15/02, B25J 9/16, B25J 19/00

(54) **ROBOT HAND AND ROBOT**

(30) Priority: 15.02.2022 JP 2022021024
(71) Applicant: Samsung Electronics Co., Ltd., Suwon-si, Gyeonggi-do 16677 (KR)
(72) Inventor: YAMAGISHI, Takeshi, Yokohama-shi, Kanagawa 230-0027 (JP); ABE, Yuki, Yokohama-shi, Kanagawa 230-0027 (JP)
(74) Representative: Gulde & Partner
(86) International application number: PCT/KR2022/018452
(87) International publication number: WO 2023/158063

(57) **Abstract**

Provided are a robot hand which may be detached by a simpler mechanism, and a robot including the robot hand. The robot hand includes a hand part 311 and a mounting part 312. The hand part 311 may grip a target object. The mounting part 312 may mount the hand part 311 to the mounted part. The hand part 311 may have a first movement region and a second movement region. The first movement region may be used in case that the hand part 311 grips the target object. The second movement region may be used in case that the hand part 311 is removed from the mounted part. The mounting part 312 may be fixed to the mounted part in the first movement region. In addition, the mounting part 312 may be removed from the mounted part in the second movement region.

## Description

### [Technical Field]

Apparatuses and methods consistent with the disclosure relate to a robot hand and a robot, and more particularly, to a replaceable robot hand and a robot including the robot hand.

### [Background Art]

In recent years, attempts have been made in which a robot grasps a tool used by a human and performs various tasks. Here, the robot may replace a robot hand, which is a part that grips the tool or the like, by another one to respond to the various tasks. For example, cleaning may be performed in case that the robot hand itself is replaced by another one having a function like a tool such as a cleaning nozzle. The robot hand is being introduced in some markets, such as for industrial use or research and development.

Patent Document 1 discloses an air chuck. The air chuck includes a finger support part, a chuck body part and a coupling mechanism. The finger support part may have a pair of fingers and a pair of lock shafts. The chuck body part may have an operation mechanism for opening and closing the finger. The coupling mechanism may detachably connect the chuck body part and the finger support part with each other. The coupling mechanism may displace the lock shaft to its unlocked position in case that the finger support part is connected to the chuck body part. In addition, the coupling mechanism may allow the pair of fingers to be opened or closed. The coupling mechanism may displace the lock shaft to its locked position in case that the finger support part is separated from the chuck body part. In addition, the coupling mechanism may lock the pair of fingers so that the pair of fingers is neither opened nor closed.

Patent Document 2 discloses an air chuck. The air chuck may include a connecting member and a guide member. The connecting member may include a recessed part having an opening at one side of a manipulator-side gripping part in an axial direction of a tool drive part. The connecting member may include a fixing member for fixing a tool-side gripping part, and the fixing member may be positioned in vicinity of an opening end at a side of the recessed part. The connecting member may fit the tool-side gripping part to the opening end of the recessed part. A driven part of the gripping part may be positioned to face the drive part, and the connecting member may fix the two parts by using the fixing member. The connecting member may connect the drive part and the driven part with each other between the two gripping parts. The guide member may lock the gripping parts at their fitting position while guiding the gripping parts to be fitted to each other.

### [Related Art Document]

### [Patent Document]

[Patent Document 1] Japanese Patent Laid-Open Publication No. 2021-197937
[Patent Document 2] Japanese Patent Laid-Open Publication No. H11-207676

### [Disclosure]

### [Technical Problem]

Conventionally, a replaceable robot hand needs to include an actuator or the like as a mechanism for detachment of the robot hand. For this reason, a structure of the robot hand may be complicated, and the number of its parts may become easily increased. As a result, the robot hand may tend to be expensive. Moreover, the robot hand may tend to become large in size and heavy in weight. It is thus difficult to introduce the robot hand, for example, for home use.

The disclosure provides a robot hand which may be detached by a simpler mechanism, and a robot including the robot hand.

### [Technical Solution]

A robot hand of the disclosure includes a gripping part and a mounting part. The gripping part may grip a target object. The mounting part may mount the gripping part to the mounted part. The gripping part may have a first movement region and a second movement region. The first movement region may be used in case that the gripping part grips the target object. The second movement region may be used in case that the gripping part is removed from the mounted part. The mounting part may be fixed to the mounted part in the first movement region. In addition, the mounting part may be removed from the mounted part in the second movement region.

Here, the mounting part may include a slide part that slides in conjunction with an operation of the gripping part. The slide part may be fixed to the mounted part in the first movement region as the slide part slides. The mounting part may thus be fixed to the mounted part. Meanwhile, the fitting of the slide part may be released from the mounted part in the second movement region. The mounting part may thus be removed from the mounted part.

In addition, the slide part may slide by a force transmitted to the slide part by a cam rotated in conjunction with the operation of the gripping part.

In addition, the slide part may be operated in conjunction with the operation of the gripping part. In addition, the slide part may slide by a force transmitted through a link part connected to the slide part.

In addition, the robot hand may be covered by a waterproof part that performs waterproofing of the entire outside of the robot hand, including a portion connected to the mounted part.

In addition, the waterproof part may include a first cover and a second cover. The first cover may cover a joint part of the gripping part. The second cover may cover a non-joint part that is a part other than the joint part of the gripping part.

In addition, the robot hand may further include a packaging part that performs waterproofing of a boundary between the first cover and the second cover.

In addition, the second cover may have flexibility and be deformed based on an operation of the joint part.

In addition, the robot hand may further include a transmission part that transmits a driving force of a motor to the gripping part. The motor may drive the gripping part. The transmission part may transmit the driving force of the motor by using a magnetic coupling mechanism. In addition, the transmission part may remove the gripping part from the mounted part by separating the gripping part from a part of the magnetic coupling mechanism.

In addition, the magnetic coupling mechanism may connect a first magnetic rotation part and a second magnetic rotation part with each other by a magnetic force. The first magnetic rotation part may be positioned on the mounted part. The second magnetic rotation part may be positioned on the transmission part. The magnetic coupling mechanism may transmit the driving force of the motor by the first magnetic rotation part and the second magnetic rotation part. In addition, the waterproof part may be positioned between the first magnetic rotation part and the second magnetic rotation part.

In addition, the robot hand may further include an adhesion part that adheres to the target object.

In addition, the gripping part may include a pair of hands. Here, the adhesion part may be positioned on at least one of: one of the pair of hands, the other one of the pair of hands, or between the pair of hands.

In addition, the adhesion part may be positioned on a front end of one of the pair of hands, and may not be positioned on the other one of the hands.

In addition, the plurality of adhesion parts may be positioned on the front end of one of the pair of hands.

In addition, the adhesion part may include an adhesion pad, a pump, and a first waterproof filter. The adhesion pad may adhere to the target object. The pump may suction air. The first waterproof filter may prevent water from entering the inside of the robot hand together with air suctioned by the pump.

In addition, the adhesion part may include an exhaust port that exhausts air suctioned by the pump. The exhaust port may include a second waterproof filter that prevents water from entering the inside of the robot hand from the exhaust port.

In addition, the robot hand may further include a film covering at least a portion of the adhesion pad.

In addition, the robot hand may further include a pressing mechanism positioned on a surface of the adhesion pad, opposite to its surface on which the adhesion pad adheres to the target object, and presses the adhesion pad.

A robot of the disclosure may include the robot hand, and a mounted part that mounts the robot hand thereto.

A robot of the disclosure may include a gripping part, a mounted part, a motor, and a controller. The gripping part may grip a target object. The mounted part may mount the gripping part thereto. The motor may drive the gripping part. The controller may control the motor. The gripping part may have a first movement region and a second movement region. The first movement region may be used in case that gripping part grips the target object. The second movement region may be used in case that the gripping part is removed from the mounted part. The controller may allow the gripping part to be driven in the first movement region in case that the gripping part grips the target object. The gripping part may thus be fixed to the mounted part. The controller may allow the gripping part to be driven in the second movement region in case that the gripping part is removed from the mounting part. The gripping part may thus be removed from the mounted part.

The controller may further control an adhesion part that adheres to the target object.

In addition, the controller may control the target object to be gripped by the gripping part. In addition, the controller may control the target object to be absorbed by the adhesion part.

In addition, the controller may control identifying of the target object. In addition, the controller may control at least one of gripping or adhering to the target object by using a method registered for the registered target object in case that the identified target object is the registered target object. The gripping may be the gripping of the registered target object by the gripping part. In addition, the adhering may be the adhering to the registered target object by the adhesion part.

On the other hand, the identified target object may be an unregistered target object. In this case, the controller may control at least one of gripping or adhering to the target object. The gripping is the gripping of the unregistered target object by the gripping part. In addition, the adhering may be the adhering to the unregistered target object by the adhesion part. In addition, the controller may perform control to register at least one method in which the unregistered target object is successfully gripped and adhered to in association with the unregistered target object.

The gripping part may include a pair of hands. Here, the adhesion part may be positioned on at least one of: one of the pair of hands, the other one of the pair of hands, or between the pair of hands. The controller may control the adhesion part to adhere to the target object.

The adhesion part may include an adhesion pad, a pump, and a first waterproof filter. The adhesion pad may adhere to the target object. The pump may suction air. The first waterproof filter may prevent water from entering the inside of the robot hand together with air suctioned by the pump. In addition, the controller may control the target object to be adhered to the adhesion pad by controlling an operation of the pump.

### [Advantageous Effects]

As set forth above, the disclosure may provide the robot hand which may be detached by a simpler mechanism, and the robot including the robot hand.

### [Description of Drawings]

FIG. 1 is a view showing an example of an overall configuration of a robot system to which embodiments of the disclosure are applied;
FIGS. 2A and 2B are views each showing a first example of a mechanism for detachment of a robot hand;
FIGS. 3A and 3B are views each showing the first example of the mechanism for the detachment of the robot hand;
FIG. 4 is a view showing the first example of the mechanism for the detachment of the robot hand;
FIGS. 5A and 5B are views each showing a second example of the mechanism for the detachment of the robot hand;
FIGS. 6A and 6B are views each showing the second example of the mechanism for the detachment of the robot hand;
FIG. 7 is a view showing the second example of the mechanism for the detachment of the robot hand;
FIGS. 8A and 8B are views each showing a case where a mounting part is a rack-and-pinion type mounting part;
FIGS. 9A and 9B are views each showing a case where the mounting part is a lead screw;
FIG. 10A shows a state where a motor is removed together with a hand part without leaving the motor on an arm, and FIG. 10B shows a state where the motor is left on the arm and the hand part is removed;
FIGS. 11A and 11B are views for explaining a waterproofing mechanism of the robot hand;
FIGS. 12A and 12B are views each showing a packaging part;
FIG. 13 is a view showing a magnetic coupling mechanism used in the embodiments of the disclosure;
FIG. 14 is a view showing the magnetic coupling mechanism used in the embodiments of the disclosure;
FIG. 15 is a view showing a cross-sectional structure of the hand;
FIGS. 16A and 16B are enlarged views of an adhesion part shown in FIG. 15;
FIG. 17 is a perspective view of the hand part;
FIGS. 18A, 18B and 18C are views each showing an operation of the adhesion part;
FIGS. 19A and 19B are views each showing that a thin film partially covers an adhesion pad; and
FIG. 20 is a flowchart for explaining a method for controlling a robot.

### [Mode for Invention]

Hereinafter, embodiments of the disclosure are described in detail. However, the disclosure is not limited to the following embodiments. Further, the embodiments may be variously modified within the scope of the gist. Furthermore, the drawings used here are provided for explaining the embodiments of the disclosure rather than representing the actual sizes.

### <Description of overall configuration of robot 1>

Hereinafter, embodiments of the disclosure are described in detail with reference to the accompanying drawings.

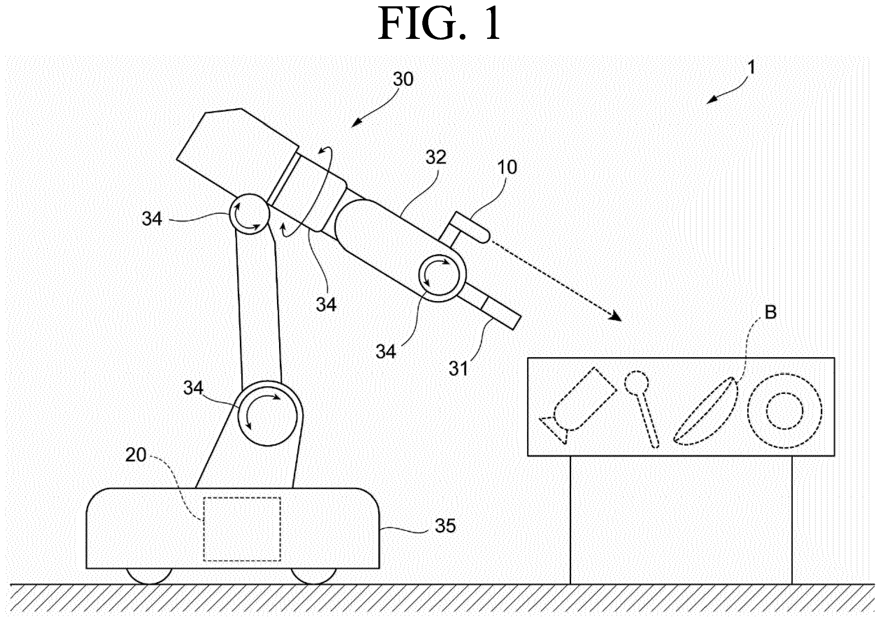

FIG. 1 is a view showing an example of an overall configuration of a robot 1 to which the embodiments of the disclosure are applied.

The robot 1 shown in the drawing may include an imaging device 10, a control device 20 and a robot body 30. In addition, FIG. 1 shows here that a plurality of target objects B exist together although not including the robot 1. The target object B is an object to be gripped by the robot body 30. Here, as an example, shown is a case where the robot 1 washes dishes or the like. In this case, the target object B may be the tableware or the like, and specifically, the target object B may be a plate, a cup, a bowl, a spoon or the like. In addition, the target object B may be a detergent, a dish sponge or the like used to wash the dishes. In addition, the robot body 30 may grip these target objects and perform the washing of the dishes or the like.

The imaging device 10 may capture an image of the target object B. The imaging device 10 may be, for example, a camera. In the embodiments of the disclosure, the imaging device 10 may be mounted on a front end of the robot body 30. In addition, the imaging device 10 may capture the target object B from above, and generate a captured image.

The control device 20 may request the position and posture of the target object B based on the captured image captured by the imaging device 10. Moreover, the control device 20 may control an operation of the robot body 30.

The robot body 30 may perform gripping of the target object B. The robot body 30 may include a robot hand 31 that actually performs the gripping of the target object B, and an arm 32 that performs positioning of the robot hand 31. In addition, the robot body 30 may include an actuator 34 that performs a rotation operation under control of the control device 20. In addition, the robot body 30 in the embodiments of the disclosure may include a movable and self-propelled moving part 35.

The robot 1 described above may be operated as follows.

First, the imaging device 10 may capture the captured image of the target object B. This captured image may be obtained under the control of the control device 20. In addition, the control device 20 may request the type, position and posture of the target object B based on the captured image. The type of the target object B may be, for example, a sort of the plate, cup, bowl, spoon or the like which is mentioned above. The position and posture of the target object B may be the position of the target object B, occupies in a three-dimensional space and its posture taken in the three-dimensional space. In addition, the control device 20 may control the robot hand 31 and the arm 32 based on the type, position and posture of the target object B, and control the gripping of the target object B. The robot body 30 may be rotated by the illustrated actuator 34 in a double arrow direction indicated by the solid line. In addition, the robot hand 31 and the arm 32 may be moved to their positions for gripping the target object B by rotating the actuator 34. For example, the robot body 30 may perform washing of the target object B after the target object B is gripped. Here, the robot body 30 may wash the target object B by itself. In addition, the robot body 30 may put the target object B in a washing machine, and the washing machine may perform actual washing. In this case, the washing machine may be a dishwasher.

Here, the robot 1 may be intended to perform the washing of the target object B, and is not limited thereto. For example, the robot 1 may be a cleaning robot that performs cleaning. Alternatively, the robot 1 may be an assembly robot that performs assembling of parts with each other. Alternatively, the robot 1 may be a welding robot that performs welding. Alternatively, for example, the robot 1 may be a transport robot that performs transporting or a painting robot that performs painting. In addition, the robot hand 31 in the embodiments of the disclosure may be detached, and thus be replaced, which is described below in detail. The robot 1 may thus be used for another purpose as well as the washing of the target object B by replacing the robot hand 31.

In addition, the robot 1 may be a mobile robot that is moved frequently or a stationary robot that is fixed in a predetermined place.

### <Description of mechanism for detachment of robot hand 31>

Next, the description describes a mechanism for the detachment of the robot hand 31 in the embodiments of the disclosure. Here, the mechanism for the detachment of the robot hand 31 is described by first and second examples.

### [First example]

The first example is first described.

In the first example, the robot hand 31 may be detached from the arm using a cam mechanism. Here, the robot hand 31 in a normal usage state may be fixed (or locked) to the arm 32 by the cam mechanism. In addition, the lock of the robot hand 31 may be released (or the robot hand 31 may be unlocked) by the cam mechanism, and thus be removed from the arm 32. Therefore, the robot hand 31 may be replaced. Here, the 'normal usage state' may refer to a state where the target object B may be gripped by the robot hand 31, and an intended operation such as the cleaning is performed.

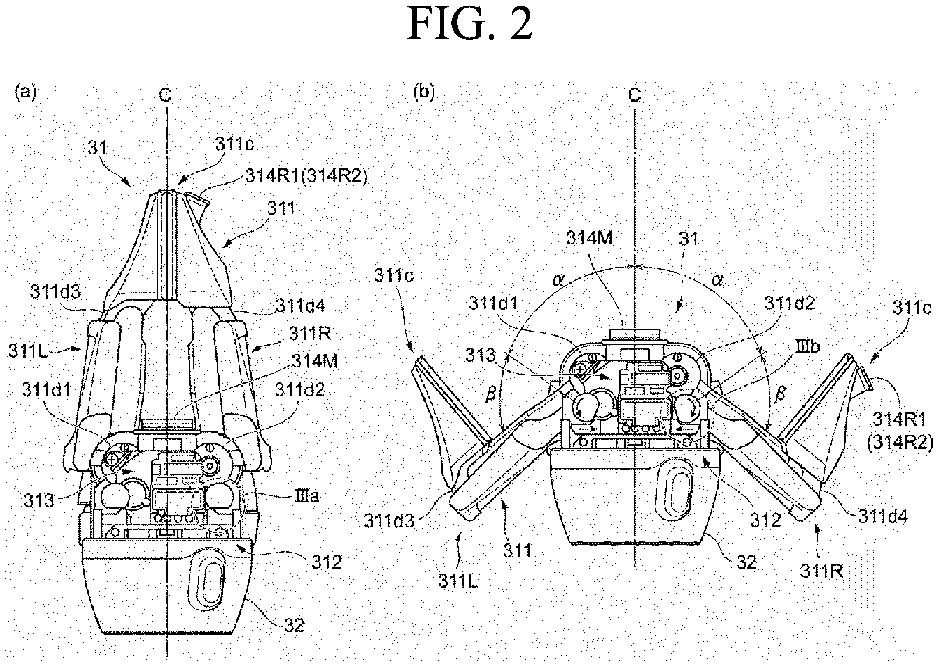

FIGS. 2A, 2B, 3A, 3B and 4 are views each showing the first example of the mechanism for the detachment of the robot hand 31.

Among these drawings, FIGS. 2A and 2B each show a state where the robot hand 31 is mounted on the arm. In addition, FIG. 2A is a view showing the normal usage state of the robot hand 31. In this state, the robot hand 31 may be fixed (or locked) to the arm 32. In addition, FIG. 2B is a view showing a state where the robot hand 31 is detached from the arm. In this state, the robot hand 31 may be removed from the arm 32.

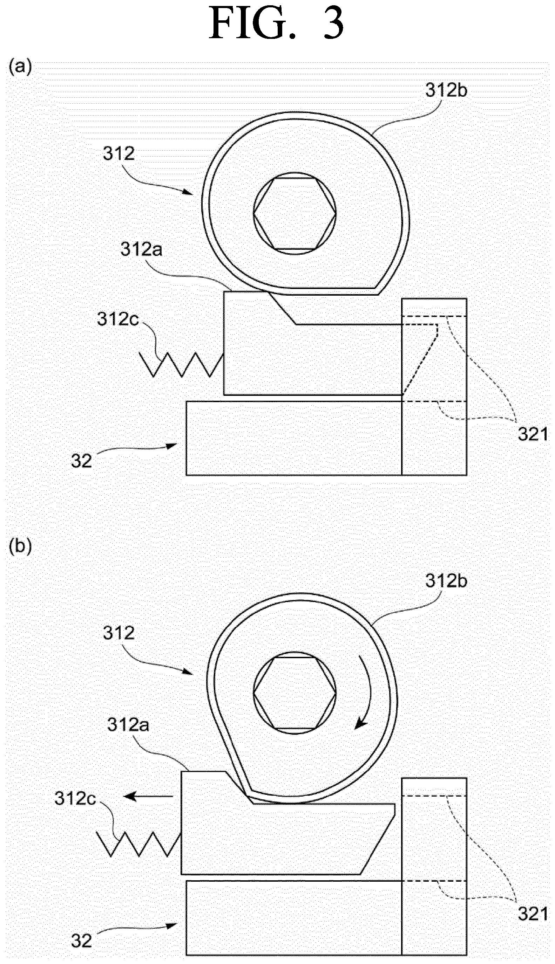

In addition, FIG. 3Ais an enlarged view IIIa of FIG. 2A. In addition, FIG. 3B is an enlarged view IIIb of FIG. 2B.

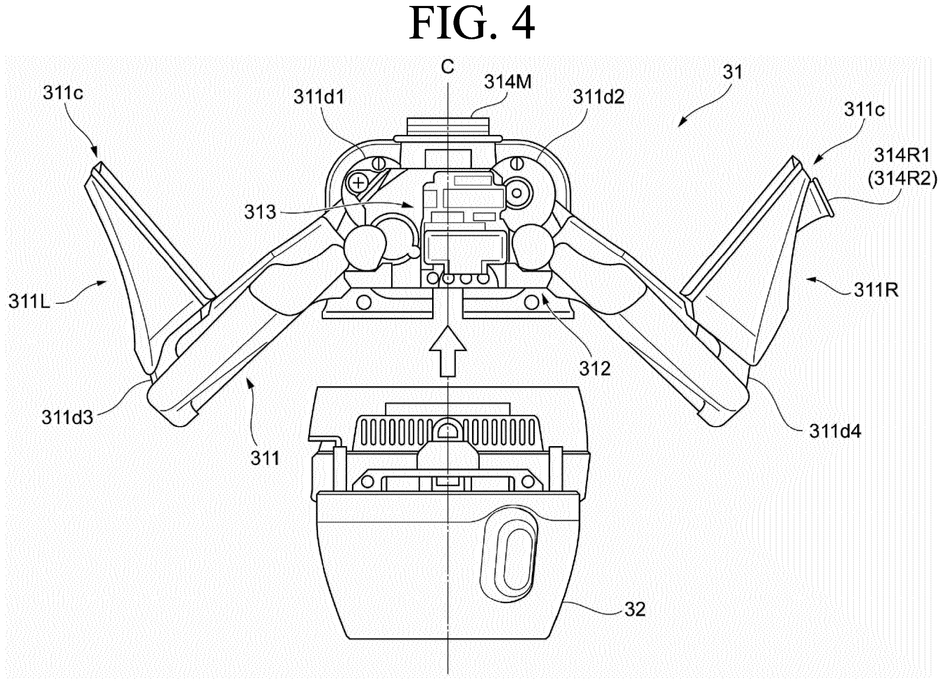

In addition, FIG. 4 is a view showing a state where the robot hand 31 is removed from the arm. That is, FIG. 4 is a view showing a state where the robot hand 31 is separated from the arm 32.

As shown in FIGS. 2A and 2B, the robot hand 31 may include a hand part 311, a mounting part 312, a speed reducer 313, an adhesion part 314R1 or 314R2 and an adhesion part 314M. In addition, FIGS. 2A and 2B also partially show a member of the arm 32 although the member is not included in the robot hand 31.

The hand part 311 may be an example of a gripping part. The hand part 311 may be driven by a motor and grip the target object B. In this case, the hand part 311 may include a hand 311L and a hand 311R. The hand 311L and the hand 311R may be a pair of members. The hand 311L and the hand 311R may grip the target object B at front ends 311c thereof. In other words, the hand 311L and the hand 311R may hold the target object B. The hand 311L and the hand 311R may each include joint parts 311d1 to 311d4. The joint parts 311d1 to 311d4 may respectively be rotated in conjunction with each other. As a result, a distance between the hand 311L and the hand 311R may be changed at parts of the front ends 311c. In addition, the target object B may then be gripped by the hand 311L and the hand 311R by fitting the target object B to the front ends 311c thereof. It is then possible to move the target object B gripped by the hand 311L and the hand 311R.

The hand part 311 may have a first movement region used in case of gripping the target object B. The hand part 311 may also have a second movement region used in case of removing the hand part 311 from a mounted part. The mounted part may be an object to which the hand part 311 is mounted, and be the arm 32.

FIG. 2B shows the first movement region and the second movement region. Here, a center line C may refer to a vertical direction from a portion where the hand 311L and the hand 311R are in contact with each other on the front ends 311c and this angle may be zero degrees. Here, the first movement region of the hand 311L may be in a range of zero degrees or more and alpha (α) degrees or less in a left rotation direction. In addition, the first movement region of the hand 311R may be in a range of zero degrees or more and α degrees or less in a right rotation direction. In addition, the second movement region of the hand 311L may be in the range of α degrees or more and (α+β) degrees or less in the left rotation direction. In addition, the second movement region of the hand 311R may be in the range of α degrees or more and (α+β) degrees or less in the right rotation direction. Here, the vertical direction, the left direction and the right direction are the directions shown in the drawings, and the hand part 311 may not be actually operated in such a direction.

The mounting part 312 may mount the hand part 311 to the mounted part. In this case, the mounted part may be the object to which the hand part 311 is mounted, and be the arm 32. That is, the mounting part 312 may be a mechanism for mounting the hand part 311 to the arm 32.

The mounting part 312 may be fixed to the arm 32 in the first movement region. Meanwhile, the mounting part 312 may be removed from the arm 32 in the second movement region. In addition, the mounting part 312 may be removed from the arm 32 in the second movement region, i.e., in any portion within the second movement region. For example, the mounting part 312 may be removed from the arm 32 in case that the hand 311L is moved at (α+β) degrees in the left rotation direction of the joint portion 311d1. Alternatively, the mounting part 312 may be removed from the arm 32 in case that the hand 311R is moved at (α+β) degrees in the right rotational direction of the joint portion 311d2. That is, in case that the hand 311L and the hand 311R are fully opened, the mounting part 312 may be removed from the arm 32.

Next, the mounting part 312 of the first example is described in detail with reference to FIGS. 3A and 3B. FIGS. 3A and 3B are enlarged views of the mounting part 312.

The mounting part 312 may include a slide part 312a that slides in conjunction with an operation of the hand part 311. The mounting part 312 may further include a cam 312b that is rotated in conjunction with the operation of the hand part 311. The mounting part 312 may further include a press part 312c that presses the slide part 312a. The press part 312c may be, for example, a coil spring.

FIG. 3A shows a state where the mounting part 312 is fixed to the arm 32. Here, the hand part 311 may be in the first movement region. In addition, the cam 312b may be in its rotation position shown in the drawing, and may not be engaged with the slide part 312a. Here, the slide part 312a may be pressed by the press part 312c in the right direction in the drawing and enters a hole part 321 of the arm 32. As a result, the slide part 312a and the hole part 321 may be fitted to each other. Accordingly, the mounting part 312 may be fixed to the arm 32, and the robot hand 31 may thus be fixed to the arm 32.

On the other hand, FIG. 3B shows a state where the mounting part 312 is removed from the arm 32. Here, the hand part 311 may be in the second movement region. In addition, the cam 312b may turn right from the state of FIG. 3A to be in its rotation position shown in the drawing. The cam 312b may be engaged with the slide part 312a. Here, the slide part 312a may be pressed by a force transmitted to the slide part 312a through the cam 312b in the left direction in the drawing. The slide part 312a may slide in the left direction in the drawing. The slide part 312a may thus be moved to its position where the slide part 312a does not enter the hole part 321 of the arm 32. As a result, the fitting of the slide part 312a and the hole part 321 may be released from each other. Accordingly, the mounting part 312 may be removed from the arm 32, and the robot hand 31 may thus be removed from the arm 32.

In this case, the slide part 312a may be fit into the hole part 321 of the arm 32 in the first movement region as the slide part 312a slides. The mounting part 312 may thus be fixed to the arm 32. As a result, the robot hand 31 may be fixed to the arm 32.

Meanwhile, the fitting of the slide part 312a may be released from the arm 32 in the second movement region. The mounting part 312 may thus be removed from the arm 32. As a result, the robot hand 31 may be removed from the arm 32.

The robot hand 31 may thus be separated from the arm 32 as shown in FIG. 4 in case that the mounting part 312 is removed from the arm 32.

The speed reducer 313 may be an example of a transmission part that transmits a driving force of the motor to the hand part 311. The speed reducer 313 is a device for reducing a rotation number of the motor. The speed reducer 313 may include a gear or the like. The rotation number may be reduced by the speed reducer 313 at a predetermined reduction ratio. In addition, the hand part 311 may be operated by the driving force output from the speed reducer 313.

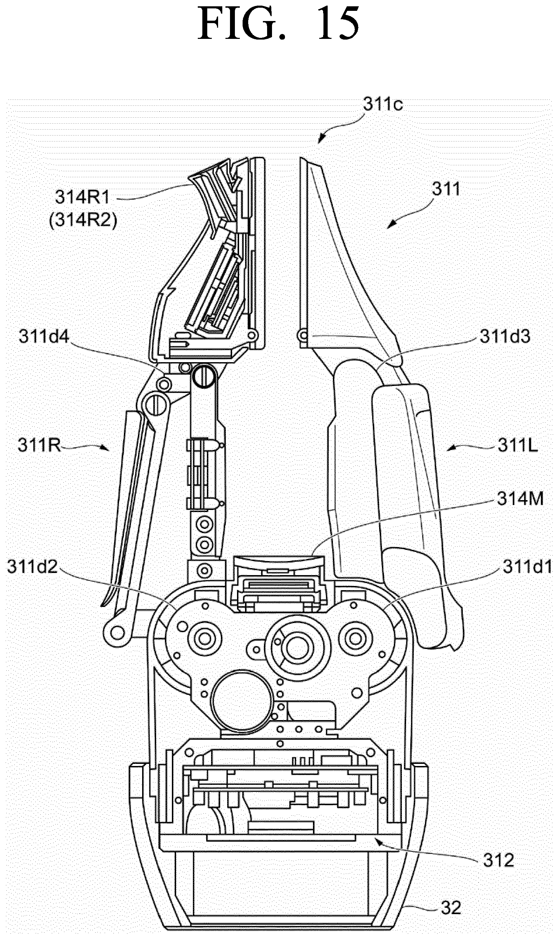

The adhesion part 314R1, 314R2 and the adhesion part 314M may each have a function of adhering to a target object B. The adhesion part 314R1, 314R2 and the adhesion part 314M may each adhere to a target object B by using a negative pressure generated in suctioning air by using a pump. It is thus possible to move the adhered target object B by the hand 311L and the hand 311R. In addition, the adhesion parts 314R1, 314R2 may indicate that the plurality of adhesion parts are the adhesion parts 314R1, 314R2. A specific shape of the adhesion part is described below with reference to FIGS. 15 to 17. In addition, hereinafter, the respective adhesion parts 314R1, 314R2 and 314M may not be distinguished from one another. In this case, the description below may simply describe the corresponding part as an "adhesion part 314."

### [Second example]

The second example is next described.

In the second example, the robot hand 31 may be detached from the arm using a link mechanism. Here, the robot hand 31 in the normal usage state may be fixed (or locked) to the arm 32 by the link mechanism. In addition, the lock of the robot hand 31 may be released (or the robot hand 31 may be unlocked) by the link mechanism, and thus be removed from the arm 32.

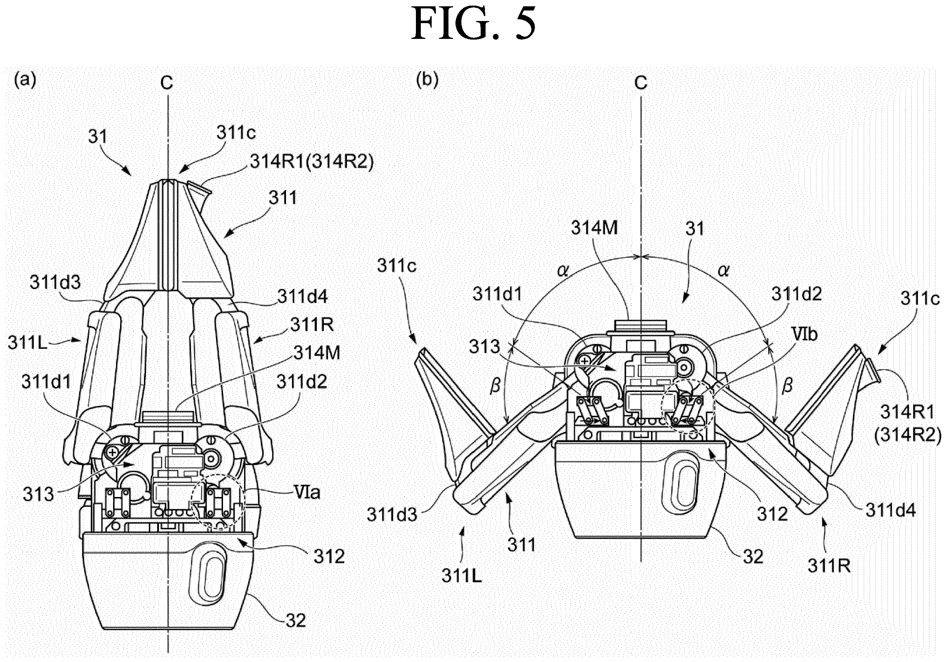

FIGS. 5A, 5B, 6A, 6B and 7 are views each showing the second example of the mechanism for the detachment of the robot hand 31.

Among these drawings, FIG. 5A and 5B each show a state where the robot hand 31 is mounted on the arm. In addition, FIG. 5A is a view showing the normal usage state of the robot hand 31. In addition, FIG. 5B is a view showing a state where the robot hand 31 is detached from the arm.

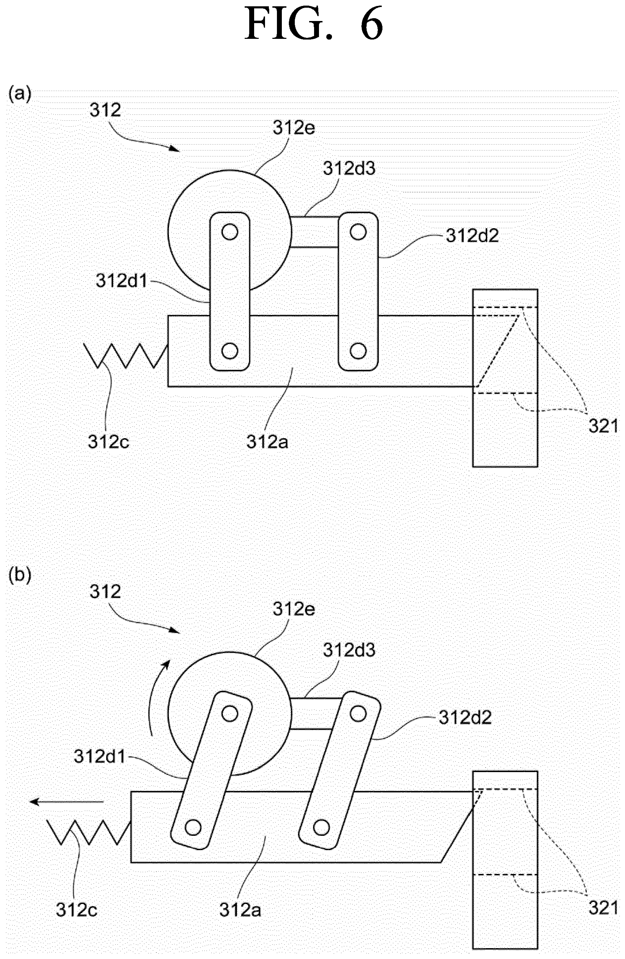

In addition, FIG. 6A is an enlarged view VIa of FIG. 5A. In addition, FIG. 6A is an enlarged view VIb of FIG. 5B.

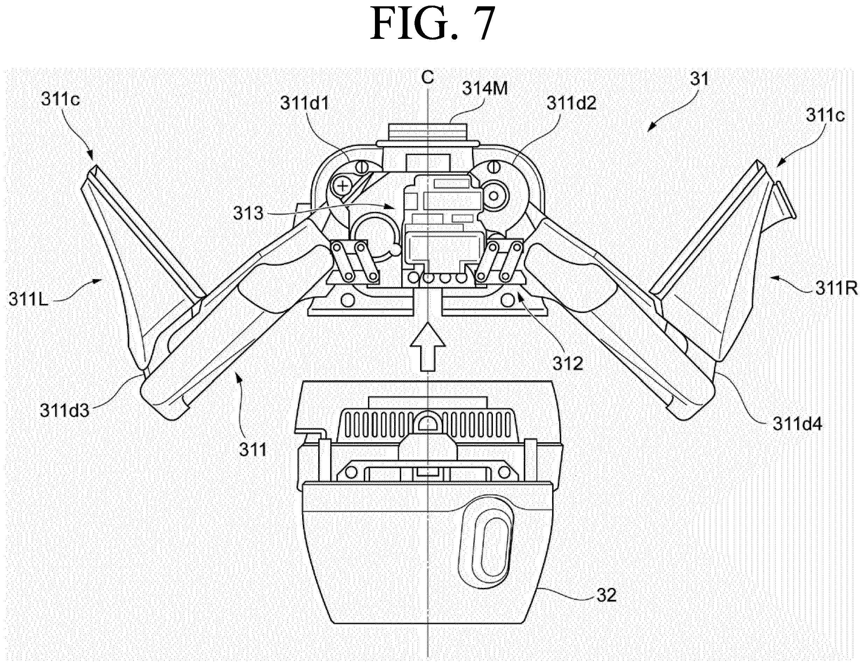

In addition, FIG. 7 is a view showing a state where the robot hand 31 is removed from the arm.

As shown in FIGS. 5A and 5B, the robot hand 31 may include the hand part 311, the mounting part 312 and the speed reducer 313, as in the first example.

The configurations of the hand part 311 and the speed reducer 313 in the second example may be the same as those in the first example. However, a configuration of the mounting part 312 in the second example is different from that of the first example.

Next, the mounting part 312 of the second example is described in detail with reference to FIGS. 6A and 6B. FIGS. 6A and 6B are enlarged views of the mounting part 312.

The mounting part 312 may include the slide part 312a and the press part 312c as in the first example. The slide part 312a may slide in conjunction with the operation of the hand part 311. The press part 312c may press the slide part 312a.

Meanwhile, the mounting part 312 may include a link part 312d1 connected to the slide part 312a. One end of the link part 312d1 may be rotatable, and connected to the slide part 312a. In addition, the other end of the link part 312d1 may not be rotatable, and thus be fixed and connected to the rotation part 312e. The mounting part 312 may further include link parts 312d2 and 312d3. One end of the link part 312d2 may be rotatable and connected to the slide part 312a. In addition, one end of the link part 312d3 may be rotatable and connected to a rotation part 312e. In addition, the other end of the link part 312d2 and the other end of the link part 312d3 may respectively be rotatable and connected with each other.

The rotation part 312e may be rotated in conjunction with the operation of the hand part 311, similarly to the cam 312b of the first example. In addition, the slide part 312a may slide by a force transmitted to the slide part 312a through the link parts 312d1 to 312d3 in case that the rotation part 312e is rotated.

FIG. 6A shows a state where the mounting part 312 is fixed to the arm 32. Here, the hand part 311 may be in the first movement region. In addition, the rotation part 312e may be in its rotation position shown in the drawing. Here, the slide part 312a may be positioned in the right direction in the drawing by the link parts 312d1 to 312d3 and enter the hole part 321 of the arm 32. As a result, the slide part 312a and the hole part 321 may be fitted to each other. Accordingly, the mounting part 312 may be fixed to the arm 32, and the robot hand 31 may thus be fixed to the arm 32.

On the other hand, FIG. 6B shows a state where the mounting part 312 is removed from the arm 32. Here, the hand part 311 may be in the second movement region. In addition, the rotation part 312e may turn right from the state of FIG. 6A to be in its rotation position shown in the drawing. Here, the slide part 312a may be pressed in the left direction in the drawing by the force transmitted to the slide part 312a through the link parts 312d1 to 312d3. The slide part 312a may thus slide in the left direction in the drawing by the link parts 312d1 to 312d3. The slide part 312a may thus be moved to its position where the slide part 312a does not enter the hole part 321 of the arm 32. As a result, the fitting of the slide part 312a and the hole part 321 may be released from each other. Accordingly, the mounting part 312 may be removed from the arm 32, and the robot hand 31 may thus be removed from the arm 32.

The robot hand 31 may thus be separated from the arm 32 as shown in FIG. 7 as a result of removing the mounting part 312 from the arm 32.

The slide part 312a may slide in the first and second examples.

The slide part 312a may be fitted into the hole part 321 of the arm 32 as the slide part slides in the first movement region. The mounting part 312 may thus be fixed to the arm 32. As a result, the robot hand 31 may be fixed to the arm 32.

Meanwhile, the fitting of the slide part 312a may be released from the arm 32 in the second movement region. The mounting part 312 may thus be removed from the arm 32. As a result, the robot hand 31 may be removed from the arm 32.

The mechanism for the detachment of the robot hand 31 is not limited to that of the first or second example. Hereinafter, other examples are described as modified examples 1 and 2.

### [Modified example 1]

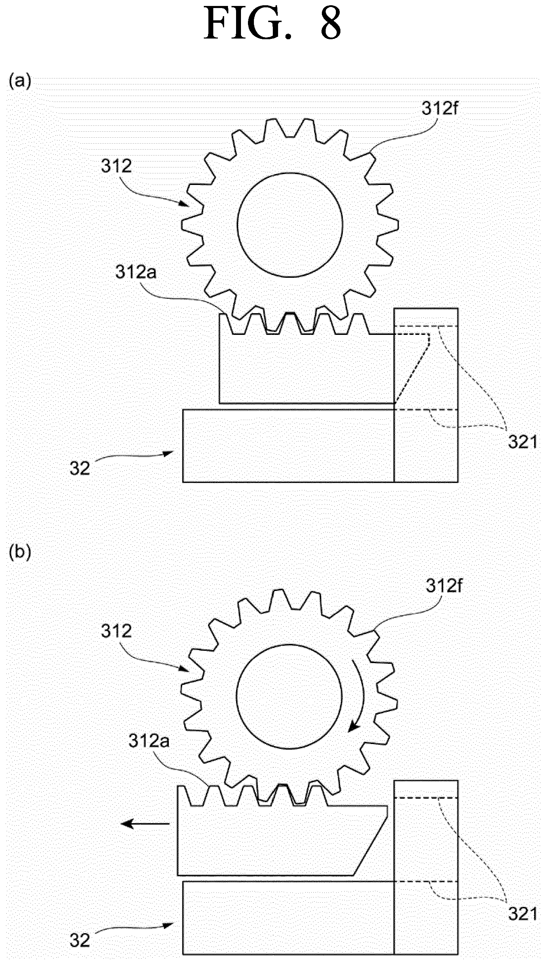

FIGS. 8A and 8B are views each showing a case where the mounting part is a rack-and-pinion type mounting part.

The mounting part 312 may include the slide part 312a as in the first example. The slide part 312a may slide in conjunction with the operation of the hand part 311.

Meanwhile, the mounting part 312 may include a pinion 312f. In addition, the slide part 312a may be a rack. The slide part 312a may be assembled with the pinion 312f. In addition, the pinion 312f may be rotated in conjunction with the operation of the hand part 311, similarly to the cam 312b of the first example. In addition, the slide part 312a may slide by a force transmitted to the slide part 312a in case that the pinion 312f is rotated.

FIG. 8A shows a state where the mounting part 312 is fixed to the arm 32. Here, the hand part 311 may be in the first movement region. In addition, the pinion 312f may be in its rotation position shown in the drawing. Here, the slide part 312a may be positioned in the right direction in the drawing by the pinion 312f and enter the hole part 321 of the arm 32. As a result, the slide part 312a and the hole part 321 may be fitted to each other. Accordingly, the mounting part 312 may be fixed to the arm 32, and the robot hand 31 may thus be fixed to the arm 32.

On the other hand, FIG. 8B shows a state where the mounting part 312 is removed from the arm 32. Here, the hand part 311 may be in the second movement region. In addition, the pinion 312f may turn right from the state of FIG. 8A to be in its rotation position shown in the drawing. Here, the slide part 312a may be pressed in the left direction in the drawing by the force transmitted to the slide part 312a through the pinion 312f. The slide part 312a may thus slide in the left direction in the drawing by the pinion 312f. The slide part 312a may thus be moved to its position where the slide part 312a does not enter the hole part 321 of the arm 32. As a result, the fitting of the slide part 312a and the hole part 321 may be released from each other. Accordingly, the mounting part 312 may be removed from the arm 32, and the robot hand 31 may thus be removed from the arm 32.

### [Modified example 2]

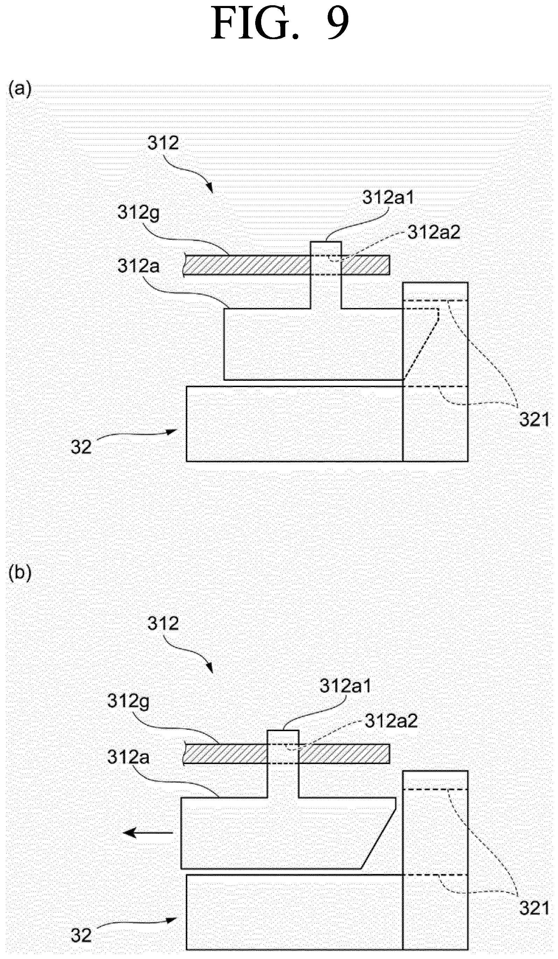

FIGS. 9A and 9B are views each showing a case where the mounting part is a lead screw.

The mounting part 312 may include the slide part 312a as in the first example. The slide part 312a may slide in conjunction with the operation of the hand part 311.

Meanwhile, the mounting part 312 may include a lead screw 312g. In addition, the slide part 312a has a projection part 312a1. The protrusion 312a1 may have a through hole part 312a2 through which the lead screw passes, and a female screw formed therein. Meanwhile, the lead screw 312g may have a female screw formed therein. Therefore, slide part 312a may slide by a force transmitted to the slide part 312a in case that the lead screw 312g is rotated about an axis.

FIG. 9A shows a state where the mounting part 312 is fixed to the arm 32. Here, the hand part 311 may be in the first movement region. In addition, the slide part 312a may here be positioned in the right direction in the drawing by the lead screw 312g and enter the hole part 321 of the arm 32. As a result, the slide part 312a and the hole part 321 may be fitted to each other. Accordingly, the mounting part 312 may be fixed to the arm 32, and the robot hand 31 may thus be fixed to the arm 32.

On the other hand, FIG. 9B shows a state where the mounting part 312 is removed from the arm 32. Here, the hand part 311 may be in the second movement region. In addition, the lead screw 312g may be rotated from the state of FIG. 9A. Here, the slide part 312a may be pressed in the left direction in the drawing by the force transmitted to the slide part 312a through the lead screw 312g. The slide part 312a may thus slide in the left direction in the drawing by the lead screw 312g. The slide part 312a may thus be moved to its position where the slide part 312a does not enter the hole part 321 of the arm 32. As a result, the fitting of the slide part 312a and the hole part 321 may be released from each other. Accordingly, the mounting part 312 may be removed from the arm 32, and the robot hand 31 may thus be removed from the arm 32.

In addition, in the case mentioned above, a motor 322 may be left on the arm 32, and the hand part 311 may be removed. However, the disclosure is not limited thereto.

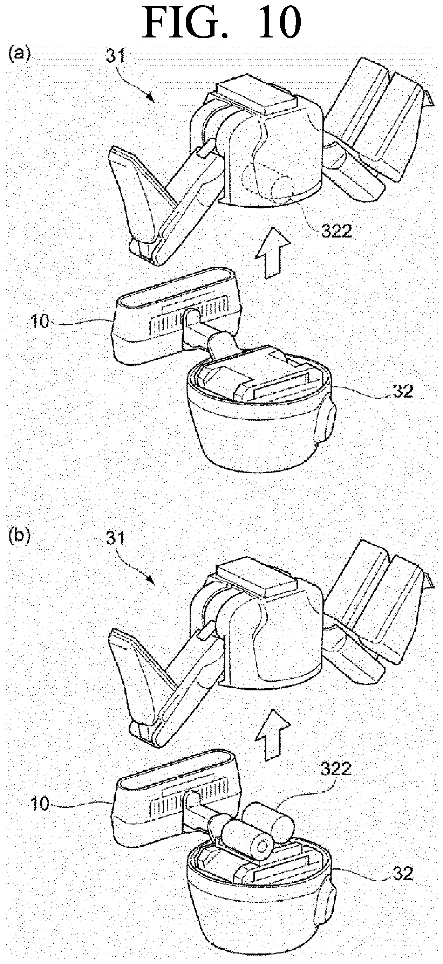

FIG. 10A shows a state where the motor 322 is removed together with the hand part 311 without leaving the motor 332 on the arm 32. In this case, the motor 322 is inside the hand part 311.

FIG. 10B shows a state where the motor 322 is left on the arm 32 and the hand part 311 is removed. In this case, the motor 322 is on the arm 32. In this case, water may not enter the motor 322 or a control board even though the hand part 311 is washed. In addition, it is easy to make the robot hand 31 smaller and lighter. It is also easy to produce the robot hand 31 at a lower cost.

### <Description of waterproofing mechanism of robot hand 31>

Next, a waterproofing mechanism of the robot hand 31 is described. The robot hand 31 may be washed after being removed. For example, the robot hand 31 used for washing dishes may be put into a dishwasher and washed. Therefore, the description below describes a case where the robot hand 31 includes the waterproofing mechanism.

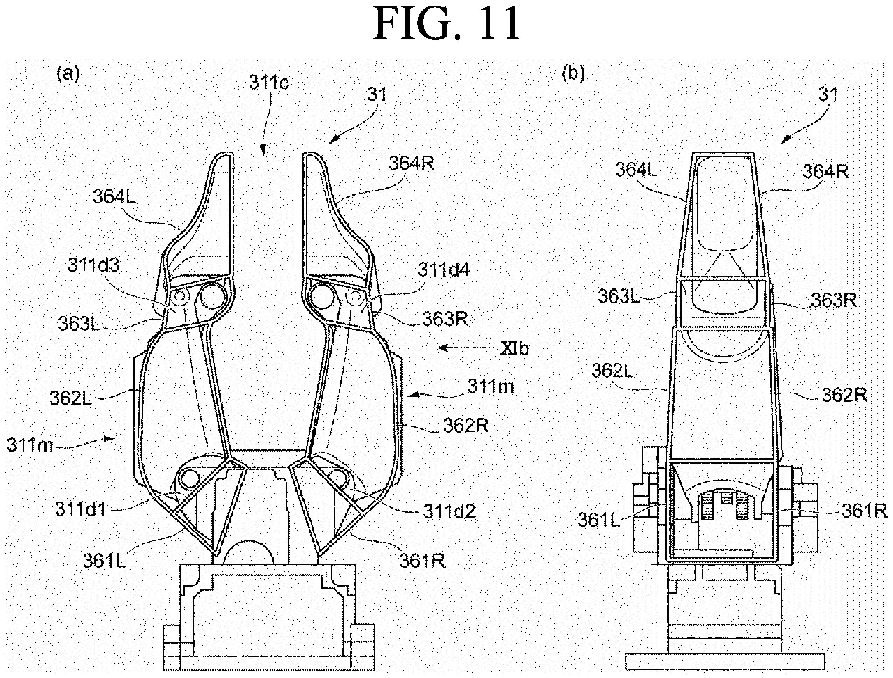

FIGS. 11A and 11B are views for explaining the waterproofing mechanism of the robot hand 31. Among these drawings, FIG. 11A is a front view of the robot hand 31. In addition, FIG. 11B is a side view seen from a direction XIb of FIG.11A.

In this case, the waterproofing mechanism of the robot hand 31 may include waterproof covers 361L to 364L and 361R to 364R. The waterproof covers 361L to 364L and 361R to 364R are an example of a waterproof part that performs waterproofing of the entire outside of the robot hand 31. That is, the entire outside of the robot hand 31 may be covered by the waterproof covers 361L to 364L and 361R to 364R. Accordingly, water may not enter the robot hand 31.

As shown in the drawings, the joint part 311d1 of the hand 311L may be mounted with a waterproof cover 361L. In addition, an intermediate part 311m of the hand 311L may be mounted with the waterproof cover 362L. In addition, the joint part 311d3 of the hand 311L may be mounted with the waterproof cover 363L. In addition, the front end 311c of the hand 311L may be mounted with the waterproof cover 364L.

Meanwhile, the joint part 311d2 of the hand 311R may be mounted with the waterproof cover 361R. In addition, an intermediate part 311m of the hand 311R may be mounted with the waterproof cover 362R. In addition, the joint part 311d4 of the hand 311R may be mounted with the waterproof cover 363R. In addition, the front end 311c of the hand 311R may be mounted with the waterproof cover 364R.

In addition, hereinafter, the respective waterproof covers may not be distinguished from one another. In this case, the description may simply describe the corresponding part as a "waterproof cover 36."

The waterproof covers 361L, 361R, 363L and 363R may be an example of a first cover that covers the joint parts 311d1 to 311d4. The waterproof covers 361L, 361R, 363L and 363R may be flexible covers. That is, the waterproof covers 361L, 361R, 363L and 363R have flexibility. The waterproof covers 361L, 361R, 363L and 363R may thus be deformed based on operations of the joint parts 311d1 to 311d4. The waterproof covers may thus maintain waterproofness of the robot hand without a gap occurring therein even though the joint parts 311d1 to 311d4 are operated.

In addition, the waterproof covers 362L, 362R, 364L and 364R may be an example of a second cover that covers a part other than the joint parts 311d1 to 311d4. The waterproof covers 362L, 362R, 364L and 364R may be rigid covers.

The waterproof cover 36 is not particularly limited to any specific material as long as the waterproof cover 36 blocks water. For example, the waterproof cover 36 may use polyvinyl chloride (PVC), polyester (PEs), a rubber material, etc.

In addition, the waterproofing mechanism of the robot hand 31 may include a packaging part that performs waterproofing of a boundary between the first cover and the second cover. The packaging part may be, for example, an O-ring.

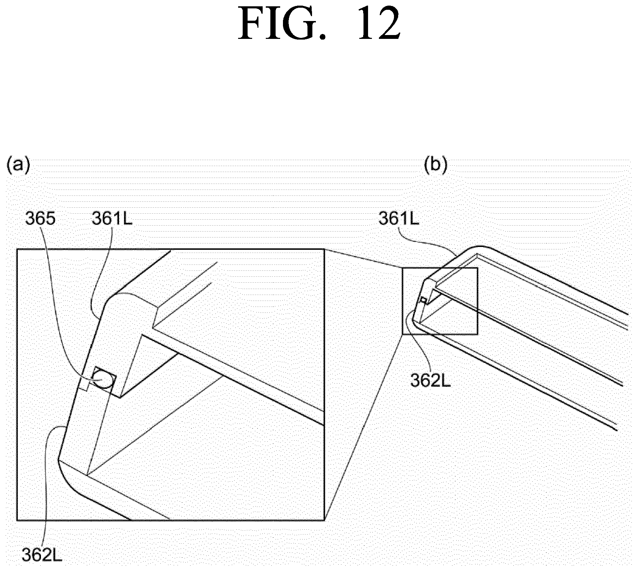

FIGS. 12A and 12B are views each showing the packaging part.

For example, the drawings show an O-ring 365 that packages a boundary between the waterproof cover 361L and the waterproof cover 362L. FIG. 12B shows the boundary between the waterproof cover 361L and the waterproof cover 362L. In addition, the O-ring 365 may be fitted to this boundary, as shown to FIG. 12A. The O-ring 365 may prevent the occurrence of the gap between the waterproof covers 36 and maintain the waterproofness.

The waterproofness may be improved by using the waterproof cover 36 or the O-ring 365. In addition, the waterproof cover in this form may have superior design compared to a waterproof cover in the form of gloves. In addition, the waterproof cover 36 may be easily mounted on the robot hand 31.

In addition, a screwing part may also be packaged by the O-ring or the like. For this reason, the screwing part may include no gap occurring therein, and thus maintain its waterproofness.

The waterproof cover 36 may also perform waterproofing of a portion where the robot hand 31 is connected to the arm 32. The waterproof cover 36 may also perform the waterproofing of the boundary between the robot hand 31 and the arm 32.

However, the motor 322 may be positioned on the arm 32 as shown in FIG. 10B. Here, a problem may occur in a mechanism that transmits a driving force of the motor 322 to the robot hand 31. In the embodiments of the disclosure, this problem may be solved by a magnetic coupling mechanism (or magnetic coupling connection).

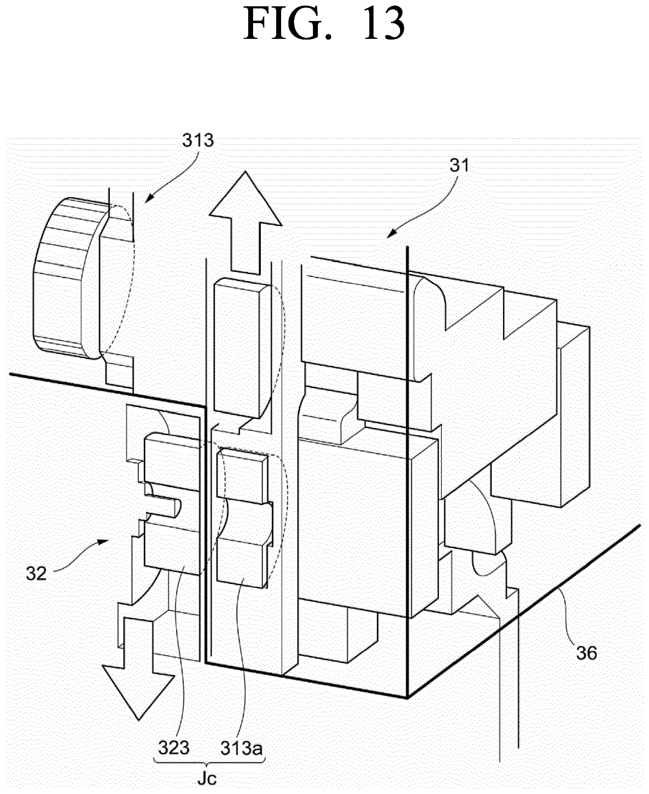

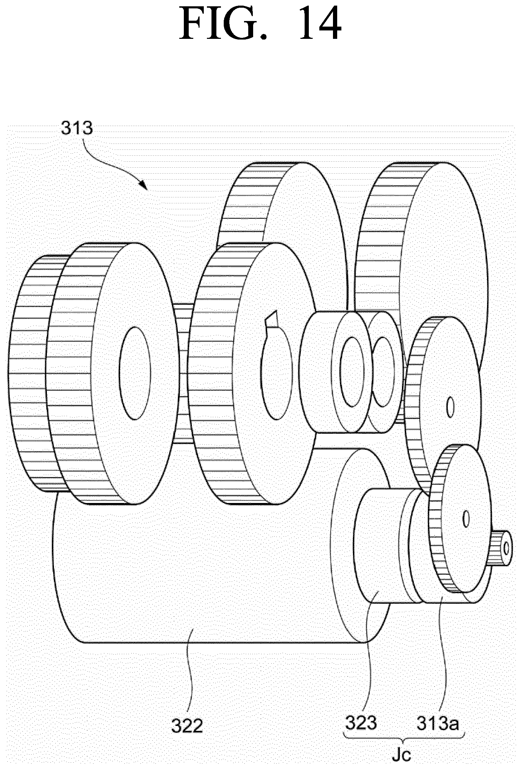

FIGS. 13 and 14 are views each showing the magnetic coupling mechanism used in the embodiments of the disclosure.

As described above, the waterproof cover 36 may be positioned on the outside of the robot hand 31. In this case, as shown in FIG. 13, the waterproof cover 36 may be positioned between the robot hand 31 and the arm 32. In addition, the waterproof cover 36 may be inserted between the robot hand 31 and the arm 32, and a magnetic coupling mechanism Jc may be positioned thereon. The magnetic coupling mechanism Jc may include a magnet 323 and a magnet 313a. The magnet 323 may be connected to the motor 322 to be rotated. In addition, the magnet 323 and the magnet 313a may be connected with each other by a magnetic force, and the magnet 313a may be rotated in the same way as the magnet 323. In addition, the magnet 313a may be a part of the speed reducer 313, and the speed reducer 313 may be operated in conjunction with the magnet 313a. That is, the driving force of the motor 322 may be transmitted in an order of the magnet 323, the magnet 313a and the speed reducer 313. As a result, the robot hand 31 may be operated by the driving force of the motor 322. Here, the magnet 323 may be an example of a first magnetic rotation part. In addition, the magnet 313a may be an example of a second magnetic rotation part.

The magnet 323 and the magnet 313a may be connected with each other only by the magnetic force through the waterproof cover 36. It is thus possible to separate the magnet 323 and the magnet 313a from each other in an arrow direction of FIG. 13 and control the robot hand 31. It is thus possible to remove the robot hand 31 by using the magnetic coupling mechanism Jc while maintaining the waterproofness of the robot hand by the waterproof cover 36.

In this case, the speed reducer 313 may transmit the driving force of the motor 322 by using the magnetic coupling mechanism Jc. The robot hand 311 may be removed from the arm 32 by being separated from the magnetic coupling mechanism Jc. In addition, in the magnetic coupling mechanism Jc, the magnet 323 positioned on the arm 32 and the magnet 313a positioned on the speed reducer 313 may be connected with each other by the magnetic force. The driving force of the motor 322 may thus be transmitted. In addition, the waterproof cover 36 may be positioned between the magnet 323 and the magnet 313a.

In addition, the motor 322 may be controlled by the control device 20. The control device 20 may be an example of a controller. Actually, a user may input a command to the robot 1 to remove the robot hand 31 by using a control panel or a portable terminal (not shown). The control device 20 may thus control the motor 322 and move the hand part 311 from the first movement region to the second movement region. Therefore, the robot hand 31 may be removed.

### <Description of adhesion part 314>

Next, the adhesion part 314 is described in more detail.

FIGS. 15, 16A, 16B, 17, 18A, 18B, 18C, 19A, 19B and 20 are views for explaining the adhesion part 314.

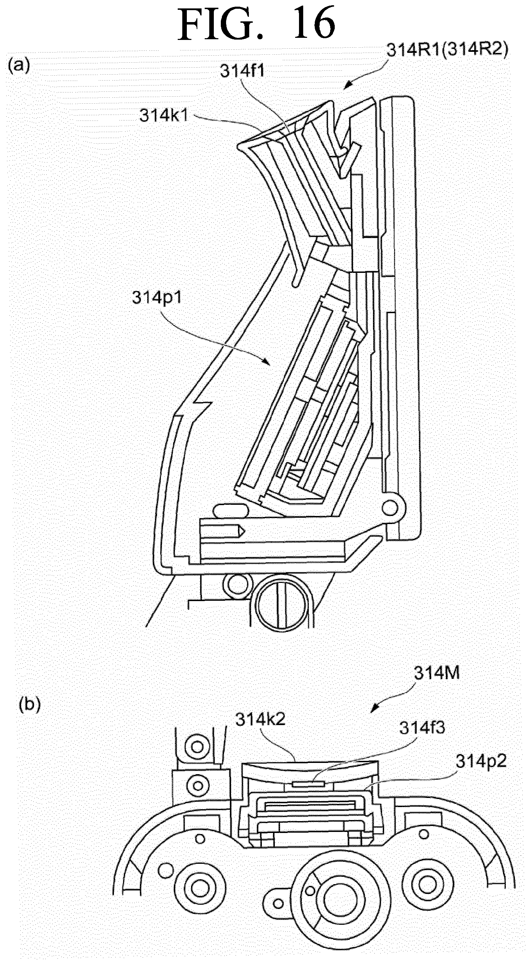

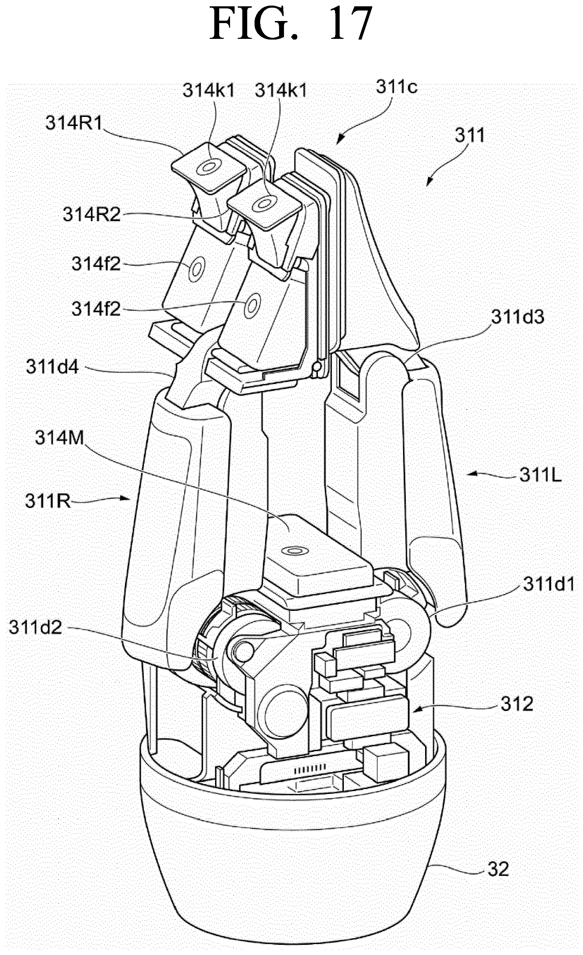

Among these drawings, FIG. 15 is a view showing a cross-sectional structure of the hand 311R. On the other hand, FIG. 15 does not show a cross-sectional structure of the hand 311L. In addition, FIG. 16A is an enlarged view of the adhesion part 314R1 or 314R2 shown in FIG. 15. In addition, FIG. 16B is an enlarged view of the adhesion part 314M shown in FIG. 15. In addition, FIG. 17 is a perspective view of the hand part 311. In addition, FIGS. 15 to 17 are views of a case where the hand part 311 is seen from the back side of FIG. 2. For this reason, compared to FIG. 2, the hand 311R and the hand 311L are shown left and right opposite to each other.

The adhesion part 314 shown in the drawings may include the adhesion part 314R1 or 314R2 and the adhesion part 314M.

As shown in FIG. 15, the adhesion part 314R1 or 314R2 may be positioned on the front end 311c of the hand 311R. As shown in FIG. 17, two adhesion parts 314 may be positioned on the front end 311c of the hand 311R. The two adhesion parts 314 are the adhesion part 314R1 and the adhesion part 314R2. The adhesion part 314R1 and the adhesion part 314R2 may be positioned in parallel to each other in a direction perpendicular to a direction in which the hand 311R is operated. A larger target object B may be secured more stably by using the two adhesion parts 314R1 and 314R2. In addition, a smaller target object B may be secured by using one of the adhesion part 314R1 and adhesion part 314R2.

Meanwhile, the adhesion part 314 may not be positioned on the hand 311L. In other words, the adhesion parts 314 may be positioned on the front end 311c of one of the pair of hands 311R and 311L. In this case, the hand 311R may be the one of the pair of hands 311R and 311L. In other words, the adhesion parts 314 may not be positioned on the front end 311c of the other one of the pair of hands 311R and 311L. In this case, the hand 311L may be the other one of the pair of hands 311R and 311L. Through this configuration, it is possible to avoid the adhesion part 314 from being obstructed by the target object B. For example, the target object B may be a bowl placed on a table or the like, and one of the hands 311R and 311L may need to be slidably placed under the bowl to grip the bowl. A space between the table and the bowl may be narrow. Here, the adhesion part 314 may be obstructed in case of using the hand 311R, and the hand may thus be difficult to be slidably placed under the bowl. On the other hand, it may be easy for the hand to be slidably placed under the bowl in case of using the hand 311L that is not mounted with the adhesion part 314.

The adhesion parts 314R1 and 314R2 may be used to secure the target object B from the front end 311c of the hand 311R. The target object B to be secured may be, for example, tableware, food, a substrate, a board, paper or the like.

In addition, the adhesion part 314 positioned on the front end 311c of the hand 311R is not limited to this type. For example, the adhesion parts 314 may be positioned on both the hands 311R and 311L. Alternatively, one adhesion part 314 may be positioned on the hand 311R or 311L. Alternatively, as shown in FIG. 17, the plurality of adhesion parts 314 may be two adhesion parts or three or more adhesion parts.

The adhesion parts 314R1 and 314R2 may each have a structure as described below.

FIG. 16A is a view showing the structures of the adhesion parts 314R1 and 314R2. In addition, the adhesion part 314R1 and the adhesion part 314R2 may have the same structure. The drawings thus show the adhesion parts 314R1 and 314R2 as the adhesion part 314R1 or 314R2.

As shown in FIG. 16A, the adhesion part 314R1 or 314R2 may include an adhesion pad 314k1, an adhesion pump 314p1 and a waterproof filter 314f1. In addition, the adhesion part 314R1 or 314R2 may include an exhaust port for exhausting the suctioned air to the outside. As shown in FIG. 17, the exhaust port may include a waterproof filter 314f2.

The adhesion pad 314k1 may adhered to the target object B by the negative pressure generated by suctioning air.

The adhesion pump 314p1 may be an example of a pump that suctions air. The adhesion pump 314p1 may be, for example, a piezo pump. The robot hand may have improved silence by using the piezo pump.

The waterproof filter 314f1 may be an example of the first waterproof filter, and have a function of blocking water but allowing air to pass therethrough. The waterproof filter 314f1 may thus prevent water from entering the inside of the robot hand together with air even in case that air is suctioned by the adhesion pump 314p1.

The waterproof filter 314f2 may be an example of the second waterproof filter, and have a function of blocking water but allowing air to pass therethrough like the waterproof filter 314f1. The waterproof filter 314f2 may thus prevent water from entering the inside of the robot hand from the exhaust port.

As shown in FIG. 15, the adhesion part 314M may be positioned between the hand 311R and the hand 311L. In other words, this adhesion part 314M may be positioned between the pair of hands 311R and 311L. In detail, the adhesion part 314M may be positioned between the rear ends of the hands 311R and 311L. That is, the adhesion part 314M may be positioned adjacent to the joint parts 311d1 and 311d2, and positioned between the joint parts 311d1 and 311d2.

The adhesion part 314M may be used, for example, to adhered to a drawer in case of opening and closing the drawer. The adhesion part 314M may also be used, for example, to adhered to a cover in case of opening and closing the cover. The cover may be, for example, the manuscript cover or front cover of the copy device. In addition, the cover may be a lid of the washing machine. The adhesion part 314M may also be used to adhered to a door in case of opening and closing the door. The adhesion part 314M may be used in case that the hand 311R and the hand 311L are open widest in the first movement region. In other words, the hand 311R and the hand 311L may be developed in the first movement region. In the example of FIG. 2B, the hand 311R and the hand 311L may be moved to have an angle of α degrees. Accordingly, the hand 311R and the hand 311L may not be obstructed by the target object B in case that the adhesion part 314M adheres to the target object B.

The adhesion part 314M may have a structure as described below.

FIG. 16B is a view showing the structure of the adhesion part 314M.

As shown in FIG. 16B, the adhesion part 314M may include an adhesion pad 314k2, an adhesion pump 314p2 and a waterproof filter 314f3. That is, the adhesion part 314M may have a structure similar to that of the adhesion part 314R1 or 314R2.

The adhesion pad 314k2 may adhere to the target object B by the negative pressure generated by suctioning air.

The adhesion pump 314p2 may be an example of the pump that suctions air. The adhesion pump 314p2 may also be, for example, the piezo pump.

The waterproof filter 314f3 may be an example of the first waterproof filter, and have the function of blocking water but allowing air to pass therethrough. It is thus possible to prevent water from entering the inside of the robot hand together with air even in case that air is suctioned by the adhesion pump 314p2.

In addition, the adhesion parts 314 in the example mentioned above may be three adhesion parts, i.e. the adhesion part 314R1, the adhesion part 314R2 and the adhesion part 314M. However, it is not necessary to have three adhesion parts, and at least one thereof may be sufficient as the adhesion part 314. That is, the adhesion part 314 may be positioned on one of the pair of hands 311L and 311R. Alternatively, the adhesion part 314 may be positioned on the other one of the pair of hands 311L and 311R. Alternatively, the adhesion part 314 may be positioned between the pair of hands 311L and 311R. The disclosure may use at least one of these three installation methods.

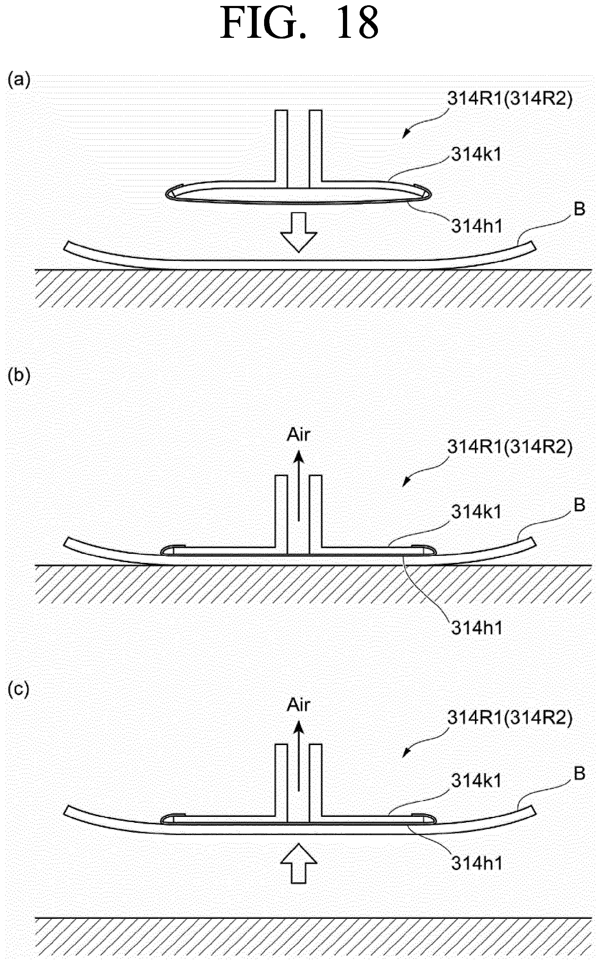

FIGS. 18A, 18B and 18C are views each showing an operation of the adhesion part 314.

In addition, the description is provided by exemplifying an operation of the adhesion part 314R1 or 314R2, and the same description may also be provided for an operation of the adhesion part 314M. In addition, the description here describes a case where a thin film 314h1 is further added to the structure described with reference to FIGS. 16A and 16B.

The thin film 314h1 may be an example of a film. The thin film 314h1 may prevent dirt from adhering to the adhesion pad 314k1 or the waterproof filter 314f1. That is, dirt may adhere to the adhesion pad 3 14 k 1 or the waterproof filter 314f1 in case that the adhesion part adheres to tableware or the like soiled with oil. In this case, the adhesion part 314R1 or 314R2 may have reduced adhesion performance. In addition, the robot hand may be difficult to clean dishes or the like in case of washing the dishes or the like. Accordingly, the robot hand may include the thin film 314h1 to prevent dirt from adhering to the adhesion pad 314k1 or the waterproof filter 314f1. In this case, the thin film 314h1 may entirely cover the adhesion pad 314k1.

FIG. 18A shows a state of the adhesion part 314R1 or 314R2 before adhering to the target object B. In the state of FIG. 18A, the adhesion pump 314p1 may not be operated and thus, air may not be suctioned by the pump. In this state, a space may exist between the adhesion pad 314k1 and the thin film 314h1. Air may exist in this space, and its atmospheric pressure may be the same as atmospheric pressure of air in the target object B.

FIG. 18B shows a state of the adhesion part 314R1 or 314R2 in case of adhering to target object B. In the state of FIG. 18B, the adhesion pump 314p1 may be operated and thus, air may be suctioned by the pump. It is thus possible to suction air existing in the space between the adhesion pad 314k1 and the thin film 314h1. In addition, the adhesion pad 314k1 and the thin film 314h1 may be deformed to make this space smaller. As a result, the negative pressure may be generated, and the target object B may be adhered to by the adhesion pad 314k1.

FIG. 18C shows a state of the adhesion part 314R1 or 314R2 in case of moving the target object B. In the state of FIG. 18B, the adhesion pump 314p1 may be operated and thus, air may be suctioned by the pump. The negative pressure generated in FIG. 18B may thus be maintained, and the target object B may be moved while being adhered to by the adhesion pad 314k1.

Here, the thin film 314h1 may not necessarily need to be provided. In addition, the thin film 314h1 may partially cover the adhesion pad 314k1 although FIG. 18 shows that the thin film 314h1 entirely covers the adhesion pad 314k1. That is, the thin film 314h1 may cover at least a portion of the adhesion pad 314k1.

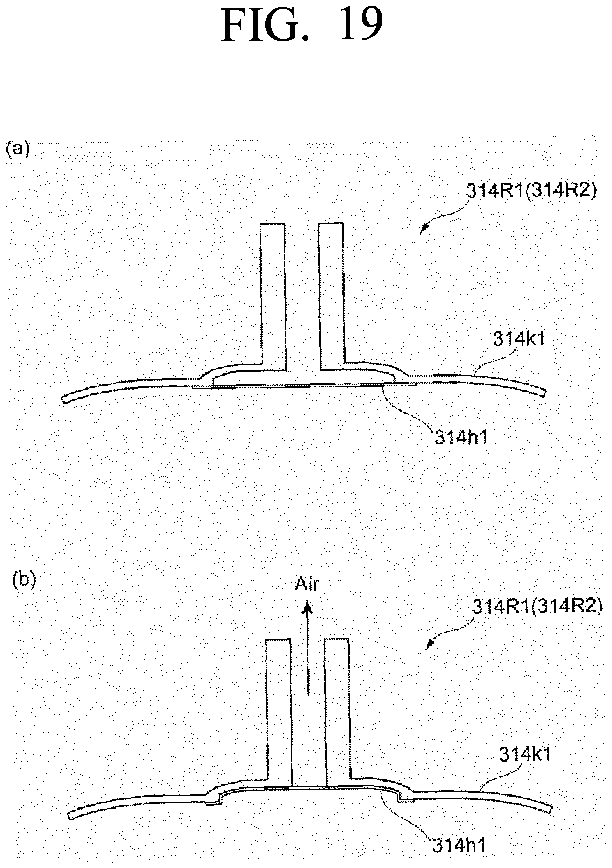

FIGS.19A and 19B are views each showing that the thin film 314h1 partially covers the adhesion pad 314k1.

FIG. 19A shows a state of the adhesion part 314R1 or 314R2 before adhering to the target object B. In the state of FIG. 19A, the adhesion pump 314p1 may not be operated and thus, air is not suctioned by the pump. This state is the same as the state of FIG. 18A.

FIG. 19B shows a state of the adhesion part 314R1 or 314R2 in case of adhering to the target object B. In the state of FIG. 19B, the adhesion pump 314p1 may be operated and thus, air may be suctioned by the pump. Air existing in a space between the adhesion pad 314k1 and the thin film 314h1 may thus be suctioned. In addition, the thin film 314h1 may be deformed to make this space smaller. As a result, the negative pressure may be generated, and the target object B may be adhered to the adhesion pad 3 14 k 1.

In this way, the adhesion part 314 may include a mechanism for preventing the target object B from sliding off. That is, the adhesion pads 314k1 and 314k2 or the adhesion pumps 314p1 and 314p2 may be positioned on the front ends 311c. The adhesion pad 314k1 or 314k2 may adhere to the target object B by the negative pressure generated by the adhesion pump 314p 1 or 314p2. This mechanism may prevent the target object B from sliding off.

In addition, a pressing mechanism such as a spring may be positioned on a surface of the adhesion pad 314k1 or 314k2, opposite to its surface on which the adhesion pad adheres to the target object B. That is, the pressing mechanism such as a spring may be positioned at the rear of the adhesion pad 314k1 or 314k2, and press the adhesion pad 314k1 or 314k2 against the target object B. Here, a direction of the adhesion pump 314p 1 or 314p2 may be changed by the pressing mechanism. In this case, even if there are irregularities on a surface of the target object B, the direction of the adhesion pad 314k1 or 314k2 may be changed based on a shape of the irregularities. That is, a posture of the adhesion pad 314k1 or 314k2 may be changed based on the shape of the surface of the target object B. The target object B may be more difficult to slip off by such a pressing mechanism.

### <Description of control of robot 1>

Next, control of the robot 1 is described in more detail. The robot 1 may be controlled by the control device 20.

Hereinafter, the description describes a method for controlling the robot 1 by the control device 20.

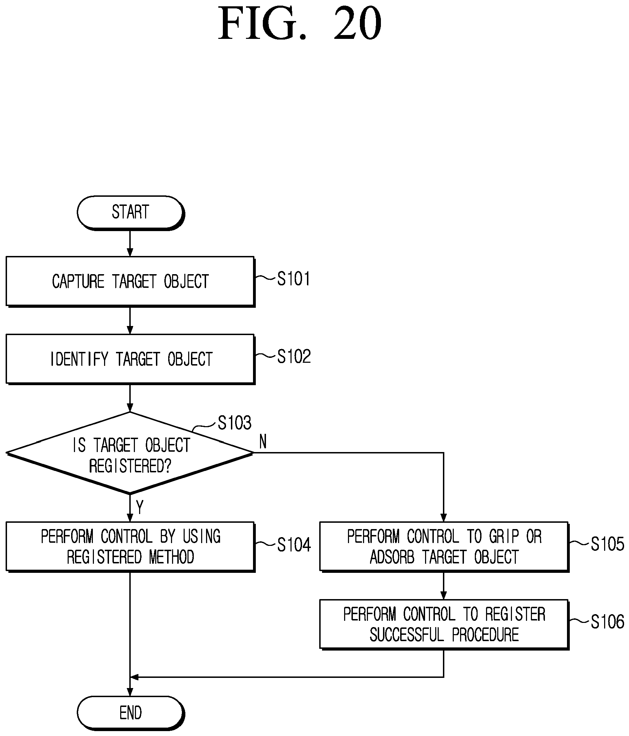

FIG. 20 is a flowchart for explaining a method for controlling the robot 1.

First, the imaging device 10 may capture the target object B (Step 101). An image of the target object B captured by the imaging device 10 may be transmitted to the control device 20.

Next, the control device 20 may identify the target object B (Step 102). The control device 20 may identify the target object B by using a conventional method. For example, the control device 20 may determine the shape, spatial position and direction of the target object B. The control device 20 may then identify the target object B by matching the target object B with a pre-registered target object.

The control device 20 may then determine whether the identified target object B is registered (Step 103).

As a result, the control device 20 may perform the following control in case that the target object B is the registered target object (Yes in Step 103). That is, the control device 20 may control at least one of gripping or adhering to the target object B by using a method registered for the registered target object (Step 104). That is, determined in advance is a certain method to perform the gripping or adhering to of the registered target object. In addition, the control device 20 may control the registered target object B to be gripped or adhered to by the predetermined method. In this case, the control device 20 may also perform control to perform either one of the gripping and the adhering to the target object B or a combination of both the gripping and the adhering to the target object B.

The control device 20 may control the opening and closing of the hand part 311 of the robot hand 31 in case that the registered target object B is gripped. In addition, the control device 20 may also control the arm 32 to match the position or direction of the robot hand 31. The registered target object may be gripped by the hand part 311 by this control.

In addition, the control device 20 may control the opening and closing of the hand part 311 of the robot hand 31 in case that the registered target object is adhered to. In addition, the control device 20 may control the adhesion part 34. In detail, the control device 20 may control an operation of the adhesion pump 314p1 or 314p2 of the adhesion part 34. In addition, the control device 20 may also control the arm 32 to match the position or direction of the robot hand 31. The control device 20 may thus control the adhesion pad 314k1 or 314k2 to adhere to the registered target object. The registered target object may be adhered to the adhesion part 314M by this control.

On the other hand, the control device 20 may perform the following control in case that the target object B is an unregistered target object (No in Step 103). That is, the control device 20 may control at least one of gripping or adhering to the unregistered target object B (Step 105). In addition, in this case, it is possible to perform either one of the gripping and the adhering or a combination of both the gripping and the adhering. That is, undetermined in advance is a certain method to perform the gripping or adhering to the unregistered target object. The control device 20 may thus control whether it is unable to perform the gripping or adhering to of the unregistered target object. The control device 20 may determine which one to be selected based on the size, direction, shape or the like of the unregistered target object in case that the target object is gripped or adhered to. In addition, the control device 20 may determine a posture of the hand part 311 based on the size, direction, shape or the like of the unregistered target object. In addition, the control device 20 may control the attempt to be repeated using another method although the gripping or adhering to of the target object fails. That is, the control device 20 may control the attempt to be repeated.

The control device 20 may perform control to register a successful procedure after the attempts (Step 106). That is, the control device 20 may perform the control to register at least one method in which the unregistered target object is successfully gripped and adhered to in association with the unregistered target object. For this reason, the unregistered target object may thus be treated as the registered target object.

According to the embodiments described in detail above, the driving force of the motor 322 may be used for the detachment of the robot hand 31. Therefore, another actuator or the like may not be required for the detachment of the robot hand 31. That is, the disclosure may provide the robot hand which may be detached using a simpler mechanism. The disclosure may also provide the robot including the robot hand. The disclosure may also provide the robot hand 31 having a less number of parts, and easily provide the robot hand 31 made smaller and lighter. The disclosure may also provide the robot hand 31 easily produced at a lower cost.

## Claims

1. A robot hand comprising:
a gripping part configured to grip a target object; and
a mounting part configured to mount the gripping part to a mounted part,
wherein the gripping part has a first movement region used in case of gripping the target object, and a second movement region used in case of being removed from the mounted part, and
the mounting part is fixed to the mounted part in the first movement region, and the mounting part is removed from the mounted part in the second movement region.

2. The robot hand as claimed in claim 1, wherein the mounting part includes a slide part configured to slide in conjunction with an operation of the gripping part, and
the mounting part is fixed to the mounted part by fitting the slide part to the mounted part in the first movement region as the slide part slides, and the mounting part is removed from the mounted part by releasing the fitting of the slide part from the mounted part in the second movement region.

3. The robot hand as claimed in claim 1, wherein the robot hand is covered by a waterproof part configured to perform waterproofing of the entire outside of the robot hand, including a portion connected to the mounted part.

4. The robot hand as claimed in claim 3, wherein the waterproof part includes a first cover that covers a joint part of the gripping part, and a second cover that covers a non-joint part that is a part other than the joint part of the gripping part.

5. The robot hand as claimed in claim 4, wherein further includes a packaging part configured to perform waterproofing of a boundary between the first cover and the second cover.

6. The robot hand as claimed in claim 3, further comprising a transmission part configured to transmit a driving force of a motor configured to drive the gripping part to the gripping part,
wherein the transmission part is configured to remove the gripping part from the mounted part by transmitting the driving force of the motor by using a magnetic coupling mechanism and separating the gripping part from a part of the magnetic coupling mechanism.

7. The robot hand as claimed in claim 1, further comprising an adhesion part configured to adhere to the target object.

8. The robot hand as claimed in claim 7, wherein the gripping part includes a pair of hands, and
the adhesion part is positioned on at least one of: one of the pair of hands, the other one of the pair of hands, or between the pair of hands.

9. The robot hand as claimed in claim 7, wherein the adhesion part includes an adhesion pad configured to adhere to the target object, a pump configured to suction air, and a first waterproof filter configured to prevent water from entering the inside of the robot hand together with air suctioned by the pump.

10. The robot hand as claimed in claim 9, wherein the adhesion part includes an exhaust port configured to exhaust air suctioned by the pump, and
the exhaust port includes a second waterproof filter configured to prevent water from entering the inside of the robot hand from the exhaust port.

11. A robot comprising:
a gripping part configured to grip a target object;
a mounted part configured to mount the gripping part thereto;
a motor configured to drive the gripping part; and
a controller configured to control the motor,
wherein the gripping part has a first movement region used in case of gripping the target object, and a second movement region used in case of being removed from the mounted part, and
the controller is configured to perform control to fix the gripping part to the mounted part by allowing the gripping part to be driven in the first movement region in case that the gripping part grips the target object, and to remove the gripping part from the mounted part by allowing the gripping part to be driven in the second movement region in case that the gripping part is removed from the mounting part.

12. The robot as claimed in claim 11, wherein the controller is configured to further control the adhesion part configured to adhere to the target object.

13. The robot as claimed in claim 12, wherein the controller is configured to control identifying of the target object, and control at least one of gripping a registered target object by the gripping part, or adhering to the registered target object by the adhesion part, by using a method registered for the registered target object in case that the identified target object is the registered target object.

14. The robot as claimed in claim 13, wherein the controller is configured to control at least one of gripping an unregistered target object by the gripping part, adhering to the unregistered target object by the adhesion part, or registering at least one method in which the unregistered target object is successfully gripped and adhered to in association with the unregistered target object, in case that the identified target object is the unregistered target object.

15. The robot as claimed in claim 14, wherein the gripping part includes a pair of hands,
the adhesion part is positioned on at least one of: one of the pair of hands, the other one of the pair of hands, or between the pair of hands, and
the controller is configured to control the adhesion part to adhere ot the target object.
